# EUROPEAN PATENT APPLICATION

(11) **EP 4 799 895 A1**
(43) Date of publication of application: **02.09.2026**
(21) Application number: 24882144.9
(22) Date of filing: 07.10.2024
(51) Int. Cl.: B61B 13/00, B61D 47/00

(54) **CARRIAGE UNIT AND METHOD FOR ASSEMBLING CARRIAGE UNIT**

(30) Priority: 23.10.2023 JP 2023181663
(71) Applicant: Sumitomo Heavy Industries, Ltd., Tokyo 141-6025 (JP)
(72) Inventor: OISHI, Kazuma, Obu-shi, Aichi 474-8501 (JP)
(74) Representative: Louis Pöhlau Lohrentz
(86) International application number: PCT/JP2024/035836
(87) International publication number: WO 2025/089027

(57) **Abstract**

A bogie unit (100) includes a traveling bogie (1) that is self-propelled; and a towed bogie (2) that is towed by the traveling bogie (1). The traveling bogie (1) includes a first mounting table (10) on which a load is placeable, the towed bogie (2) includes a second mounting table (20) on which a load is placeable, the second mounting table (20) is disposed to cover the first mounting table (10) from above, and the traveling bogie (1) and the towed bogie (2) are connected to each other by fitting a protrusion (32) provided on one of an upper surface of the first mounting table (10) and a lower surface of the second mounting table (20) into a recess (36) provided on the other.

## Description

### Technical Field

The present invention relates to a bogie unit and an assembly method of a bogie unit.

### Background Art

A technique of towing a bogie with a conveyance vehicle is known. For example, there is a technique of conveying a bogie including a cargo bed with a conveyance vehicle including a towing jig. The towing jig guides both left and right side surfaces of the bogie with a pair of receiving portions protruding upward, presses a front surface of the bogie with a plurality of forward pressing portions, and presses a rear surface of the bogie with a movable stopper, thereby connecting the conveyance vehicle and the bogie.

### Citation List

### Patent Literature

[PTL 1] Japanese Unexamined Patent Publication No. 2023-14790

### Summary of Invention

### Technical Problem

In the above-described connection technique, the conveyance vehicle and the bogie are connected to each other by surrounding and supporting the bogie with members disposed in front, rear, left, and right, and thus there is a restriction on a size of the bogie that can be connected. In view of this point, the above-described technique does not sufficiently disclose a technique that is less likely to be restricted on the size of the bogie.

One exemplary object of an aspect of the present invention is to provide a bogie unit that is less likely to be restricted on the size of a towed bogie.

### Solution to Problem

A bogie unit according to an aspect of the present invention is a bogie unit including a traveling bogie that is self-propelled and a towed bogie that is towed by the traveling bogie, and the traveling bogie includes a first mounting table on which a load is placeable. The towed bogie includes a second mounting table on which a load is placeable. The second mounting table is disposed to cover the first mounting table from above, and the traveling bogie and the towed bogie are connected to each other by fitting a protrusion provided on one of an upper surface of the first mounting table and a lower surface of the second mounting table into a recess provided on the other.

Another aspect of the present invention is an assembly method of a bogie unit. The method is an assembly method of a bogie unit including a traveling bogie that includes a first mounting table on which a load is placeable and is self-propelled, and a towed bogie that includes a second mounting table on which a load is placeable and is towed by the traveling bogie, and the towed bogie includes enclosure members respectively facing four side surfaces of the traveling bogie. A protrusion is provided on one of an upper surface of the first mounting table and a lower surface of the second mounting table, and a recess is provided on the other, the assembly method includes covering the traveling bogie with the towed bogie from above, positioning the second mounting table above the first mounting table, disposing the towed bogie to surround the four side surfaces of the traveling bogie with the enclosure members, and connecting the towed bogie to the traveling bogie by fitting the protrusion into the recess.

Note that any combinations of the above components, and those obtained by substituting the components or expressions in the present invention among methods, systems, or the like are also valid as an aspect of the present invention.

### Advantageous Effects of Invention

According to the present invention, it is possible to provide a bogie unit that is less likely to be restricted on a size of a towed bogie.

### Brief Description of Drawings

FIG. 1 is a perspective view showing an example of a bogie unit according to an embodiment.
FIG. 2 is a side sectional view showing a connection mechanism of the bogie unit in FIG. 1.
FIG. 3 is a plan view showing an enclosure member of the towed bogie in FIG. 1.
FIG. 4 is a perspective view showing a traveling bogie in FIG. 1.
FIG. 5 is a view showing disposition of wheels of the traveling bogie in FIG. 1.
FIG. 6 is a block diagram schematically showing a configuration of the bogie unit in FIG. 1.
FIG. 7 is a side sectional view showing a modification example including an advance/retract mechanism.

### Description of Embodiments

Hereinafter, the present invention will be described with reference to the drawings based on a preferred embodiment. In the embodiments and modification examples, the same or equivalent components and members will be represented by the same reference numerals and duplicate descriptions will be appropriately omitted. In addition, dimensions of the members in each drawing are shown enlarged or reduced as appropriate for easy understanding. Moreover, in each drawing, some of the members not important for the description of the embodiment are not shown.

In addition, although terms including ordinal numbers such as "first" and "second" will be used to describe various components, the terms will be used only for the purpose of distinguishing one component from the other component and no component is limited by the terms.

### [Embodiment]

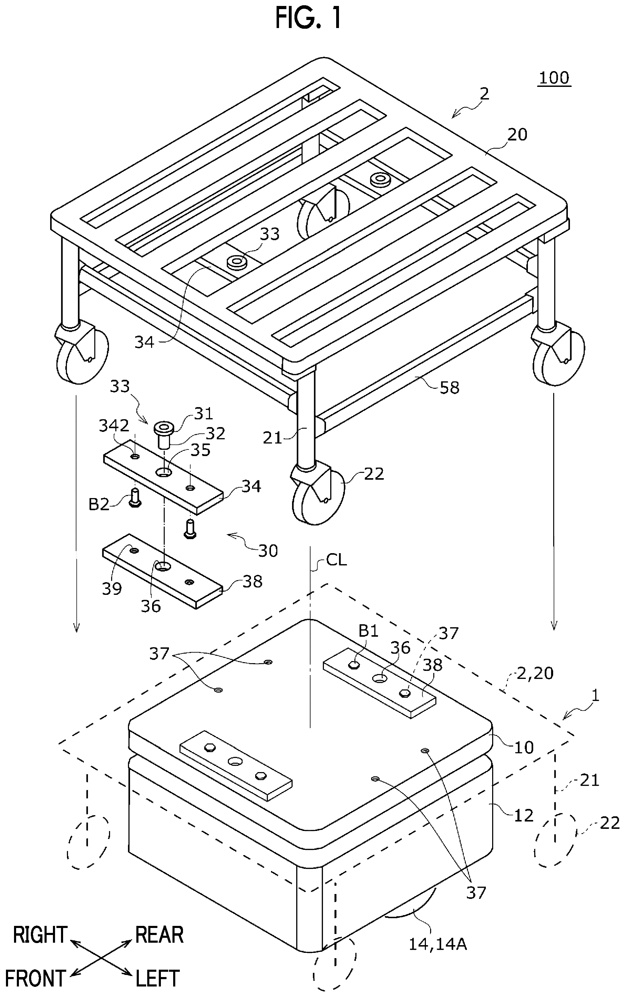

The configuration of a bogie unit 100 according to the embodiment will be described with reference to the drawings. FIG. 1 is a perspective view showing an example of the bogie unit 100. As shown by the arrows in FIG. 1, a straight direction of the bogie unit 100 is referred to as "front" or "forward", an opposite direction is referred to as "rear" or "rearward", a right direction in the straight direction is referred to as "right" or "rightward", and an opposite direction is referred to as "left" or "leftward".

The bogie unit 100 is a bogie unit including a self-propelled traveling bogie 1 and a towed bogie 2 towed by the traveling bogie 1. The traveling bogie 1 has a first mounting table 10 on which a load can be placed, and the towed bogie 2 has a second mounting table 20 on which a load can be placed. The bogie unit 100 is a bogie unit capable of conveying a mounted object (not shown) to a destination by placing the mounted object on the second mounting table 20.

In FIG. 1, the towed bogie 2 in a separated state before connection is shown by a solid line, and a contour of the towed bogie 2 after connection is shown by a broken line. The traveling bogie 1 of the embodiment also functions as an unmanned conveyance vehicle capable of conveying a mounted object (not shown) to a destination alone by placing the mounted object on the first mounting table 10.

The towed bogie 2 of the embodiment mainly includes the second mounting table 20, four leg portions 21, four wheels 22, four enclosure members 58, and a second connection member 34. The second connection member 34 will be described later.

In the embodiment, the second mounting table 20 is, for example, a mounting table having a quadrangular shape in a plan view, which is made of a pipe material such as a square column. The second mounting table 20 includes an outer peripheral pipe material in which the pipe materials are combined on four sides, and a plurality of pipe materials that are arranged in a lattice shape between the pipe materials on two sides spaced apart from each other in the front and rear.

The leg portion 21 is made of, for example, a pipe material such as a circular column, and extends downward from four corners of the first mounting table 10. The four corners of the second mounting table 20 are fixed to the leg portions 21 and are supported by the leg portions 21. The wheel 22 is a driven wheel that is fixed to a lower end of the leg portion 21 and smoothly supports horizontal movement of the towed bogie 2. The wheel 22 may be, for example, a swivel caster that can turn. In this case, the towed bogie 2 can be smoothly moved along a traveling direction of the traveling bogie 1.

The second mounting table 20 is disposed to cover the first mounting table 10 from above. In this case, the traveling bogie 1 and the towed bogie 2 are connected to each other by a connection mechanism 30. The connection mechanism 30 includes a protrusion 32 provided on one of an upper surface of the first mounting table 10 and a lower surface of the second mounting table 20, and a recess 36 provided on the other, and connects the traveling bogie 1 and the towed bogie 2 to each other by fitting the protrusion 32 into the recess 36. In the embodiment, the protrusion 32 is provided on the lower surface of the second mounting table 20, and the recess 36 is provided on the upper surface of the first mounting table 10.

In the connection state, the wheels 14 of the traveling bogie 1 and the wheels 22 of the towed bogie 2 are in contact with a floor surface (not shown), and the second mounting table 20 is spaced apart from the first mounting table 10 upward. In this case, the connection mechanism 30 and the towed bogie 2 are configured such that most of a gravity load of a cargo placed on the second mounting table 20 is transmitted to the wheels 22 of the towed bogie 2 and the first mounting table 10 is less likely to receive the gravity load received by the second mounting table 20. The connection mechanism 30 and the towed bogie 2 may be configured such that a part of the gravity load of the cargo placed on the second mounting table 20 is transmitted to the wheels 14 of the traveling bogie 1 via the first mounting table 10.

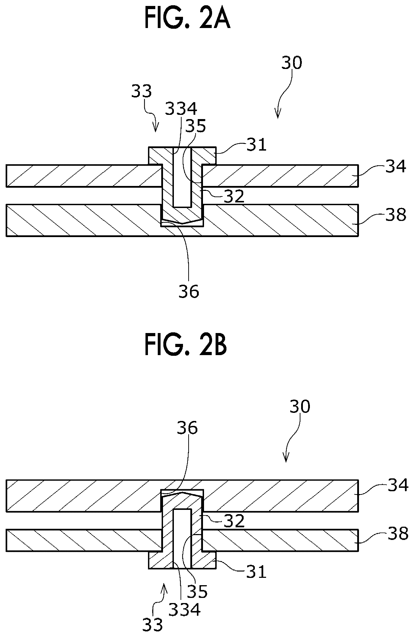

FIGS. 2A and 2B are side cross-sectional views showing the connection mechanism 30 of the bogie unit 100. The connection mechanism 30 is a mechanism that connects the traveling bogie 1 and the towed bogie 2 to each other, and includes a first connection member 38, the recess 36, a second connection member 34, and a rod-shaped member 33. FIG. 2A shows a case where the protrusion 32 is provided on the lower surface of the second mounting table 20 and the recess 36 is provided on the upper surface of the first mounting table 10, and FIG. 2B shows a case where the recess 36 is provided on the lower surface of the second mounting table 20 and the protrusion 32 is provided on the upper surface of the first mounting table 10. Hereinafter, the configuration of FIG. 2A will be described as an example.

The traveling bogie 1 includes one or more first connection members 38 that are attachably and detachably attached to the upper surface of the first mounting table 10, and the first connection member 38 includes the recess 36. The recess 36 in this example is a blind hole. The towed bogie 2 includes one or more second connection members 34 that are attachably and detachably attached to the lower surface of the second mounting table 20, and the second connection member 34 includes the protrusion 32. One or more recesses 36 are provided at positions corresponding to one or more protrusions 32.

Shapes of the first connection member 38 and the second connection member 34 are not particularly limited. In the embodiment, as shown in FIG. 1, the first connection member 38 is a rectangular strip-shaped member whose longitudinal direction extends to the left and right in a plan view. In the embodiment, as shown in FIG. 1, the second connection member 34 is a rectangular strip-shaped member whose longitudinal direction extends to the left and right in a plan view. In the embodiment, the first connection member 38 and the second connection member 34 are provided at two locations with a turning center CL of the traveling bogie 1 interposed therebetween. That is, the recess 36 and the protrusion 32 are provided at two locations with the turning center CL of the traveling bogie 1 interposed therebetween. In this case, the rotation of the towed bogie 2 with respect to the traveling bogie 1 can be limited. In a case where three or more recesses 36 and three or more protrusions 32 are provided, the recesses 36 and the protrusions 32 can be disposed to surround the turning center CL. From the viewpoint of evenly sharing a connecting load, it is desirable that the plurality of recesses 36 and the plurality of protrusions 32 are disposed at equal distances from the turning center CL.

A method of fixing the first connection member 38 is not particularly limited. In the embodiment, the first connection member 38 is fixed to a tapped hole 37 provided on the upper surface of the first mounting table 10 by using a bolt B1. The bolt B1 is screwed into the tapped hole 37 through a through-hole 39 formed in the first connection member 38. In the embodiment, the first connection member 38 is fixed by the bolts B1 at two locations with the recess 36 interposed therebetween, but may be fixed by the bolts B1 at three or more locations. A method of fixing the second connection member 34 is not particularly limited, but in the embodiment, the second connection member 34 is fixed to a tapped hole (not shown) provided on the lower surface of the second mounting table 20 by using a bolt B2. The bolt B2 is screwed into the tapped hole through a through-hole 342 formed in the second connection member 34. In the embodiment, the second connection member 34 is fixed by the bolts B2 at two locations with the protrusion 32 interposed therebetween, but may be fixed by the bolts B2 at three or more locations.

The tapped hole 37 may be dedicatedly provided only for fixing the first connection member 38, but in the embodiment, the tapped hole 37 is also used for fixing other types of attachment members (not shown). That is, an unmanned conveyance vehicle designed for general use can be used as the traveling bogie 1. In this case, there is an advantage in reducing design man-hours, and manufacturing man-hours can be reduced as compared with a case where a dedicated tapped hole is provided.

The first mounting table 10 has the tapped hole 37 provided in advance for attaching at least two types of attachment members. The first mounting table 10 may be one of the attachment members of the first mounting table 10. Examples of the attachment member include a guide member for a cargo to be placed on the first mounting table 10 and a hook for hooking a rope for fixing the cargo, in addition to the first connection member 38. In the embodiment, eight tapped holes 37 are prepared in the first mounting table 10, and the first connection member 38 uses two tapped holes 37 among the eight tapped holes 37. The number of the tapped holes 37 is not particularly limited.

As shown in FIGS. 2A and 2B, the protrusion 32 protrudes downward from the second connection member 34. The second connection member 34 and the protrusion 32 are formed separately and combined. The protrusion 32 is a tip portion of the rod-shaped member 33 inserted into the through-hole 35 provided in the second connection member 34. A flange portion 31 having a larger size than the through-hole 35 is provided on a base end side of the rod-shaped member 33. The flange portion 31 restricts a position of the protrusion 32 in an up-down direction. The rod-shaped member 33 has a hollow portion 334 that is open upward. The rod-shaped member 33 is fixed to the second connection member 34 by press-fitting, adhesion, welding, or the like. In addition, a tip of the protrusion 32 has a conical shape, and is easily inserted into the recess 36.

In a case where the protrusion 32 is largely shifted during normal use, the connection state of the connection mechanism 30 is unstable, and there is a possibility that the connection is released. Therefore, in the embodiment, the protrusion 32 is provided on the second mounting table 20 to be non-displaceable. Being non-displaceable means that the protrusion 32 is not shifted and displaced even in a case where a person applies a force to the protrusion 32 without using a tool. Specifically, since the rod-shaped member 33 including the protrusion 32 is fixed to the second connection member 34 bolted to the second mounting table 20, the protrusion 32 is firmly supported by the second mounting table 20 during normal use, and is provided not to be shifted. In a case where the protrusion is provided on the first mounting table, the protrusion is provided on the first mounting table to be non-displaceable. In addition, in a case of FIG. 2B, the rod-shaped member 33 may be fixed to the upper surface of the first connection member 38 without penetrating the first connection member 38.

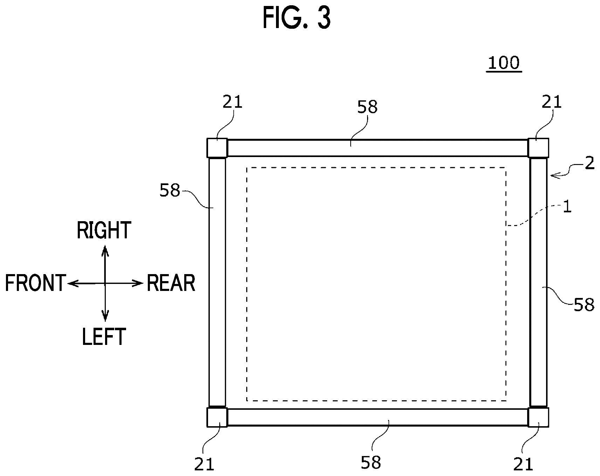

The enclosure member 58 of the towed bogie 2 will be described with reference to FIGS. 1 and 3. FIG. 3 is a plan view showing the enclosure member 58 of the towed bogie 2. In a case where the connection mechanism 30 is unintentionally released, it is considered that only the traveling bogie 1 travels and the towed bogie 2 is left behind. In this case, the traveling of all the bogies in a corresponding area is stopped, and a worker performs recovery work of returning to the connection state, and conveyance work is interrupted during this period. Therefore, in the embodiment, the towed bogie 2 includes the enclosure members 58 respectively facing the four side surfaces of the traveling bogie 1. In this case, even in a case where the connection of the connection mechanism 30 is accidentally released, the traveling bogie 1 can continue the towing by pushing the enclosure members 58.

In the embodiment, the enclosure member 58 is made of, for example, a pipe material such as a circular column extending substantially horizontally, and is bridged between two adjacent leg portions 21. Both ends of the enclosure member 58 are respectively fixed to the leg portions 21. As shown in FIG. 3, the enclosure members 58 are combined in a quadrangular shape to surround the towed bogie 2 in a plan view. The enclosure member 58 are provided at positions that are not blind spots of an on-board sensor of the traveling bogie 1, which will be described later.

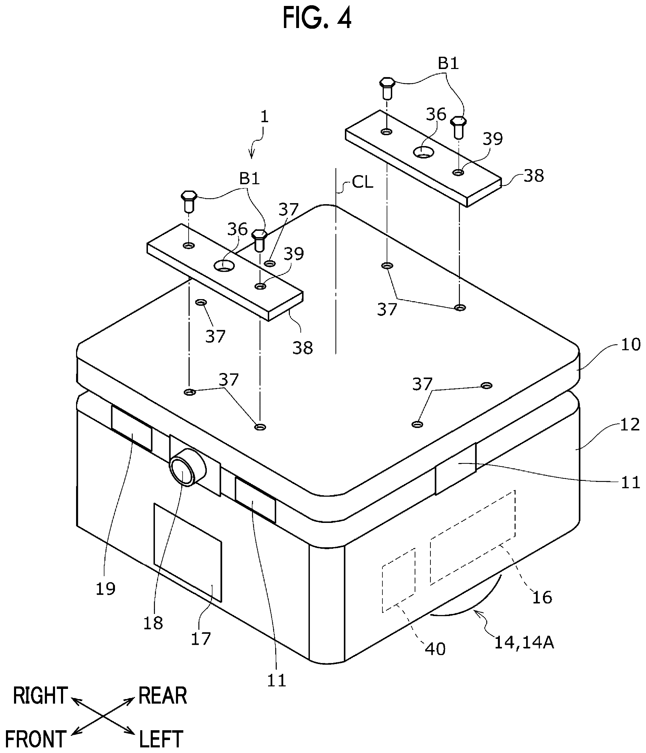

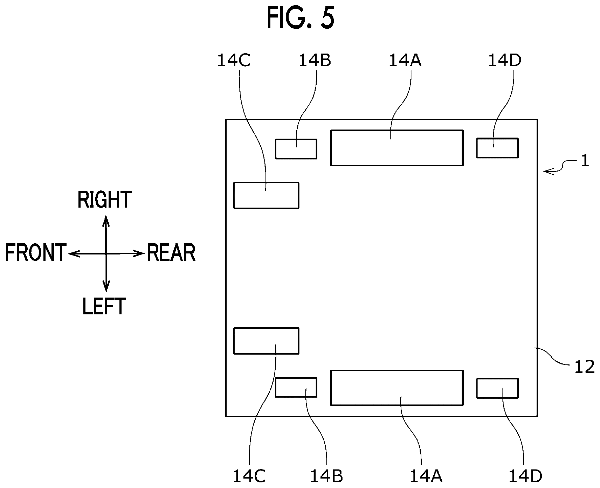

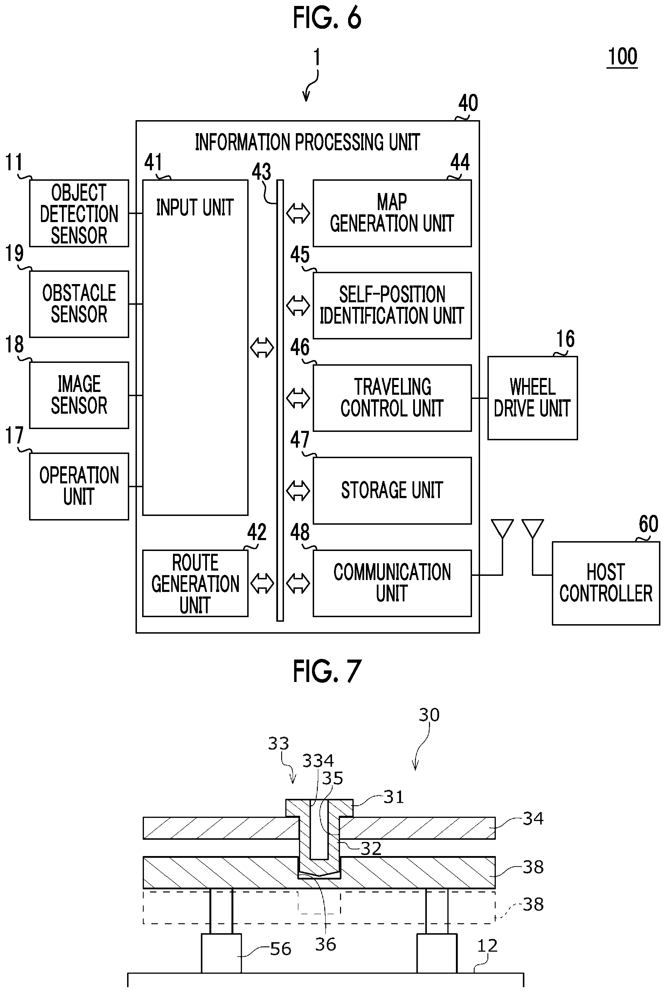

The traveling bogie 1 will be described with reference to FIGS. 4, 5, and 6. FIG. 4 is a perspective view showing the traveling bogie 1. FIG. 5 is a view showing disposition of the wheels of the traveling bogie 1. FIG. 6 is a block diagram schematically showing the configuration of the bogie unit 100.

As an example, the traveling bogie 1 may be an autonomous mobile robot (AMR) that autonomously move to a destination. The traveling bogie 1 of the embodiment can generate a travel route from a departure point to a destination and autonomously travel along the generated route. The autonomous traveling of the traveling bogie 1 can be implemented by using an autonomous traveling technique based on a known principle. As an example, the traveling bogie 1 of the embodiment autonomously travels by using a control technique called simultaneous localization and mapping (SLAM).

Since SLAM is a known technique, detailed description thereof will be omitted. SLAM can simultaneously perform a self-position identification function and a map creation function of the traveling bogie 1. The map creation function is a function of acquiring surrounding information on what is present in the surroundings through an imaging unit or a mounted sensor and creating map information, which is a map of the surroundings, based on the surrounding information. The self-position identification function is a function of comparing the map information with storage data of information on a place stored in advance and identifying a self-position and a self- direction on the map in a case where the storage data and the map information match. The traveling bogie 1 can calculate a distance between the traveling bogie 1 and an obstacle, a landmark, or the like in the surroundings using SLAM and control the traveling to avoid the obstacle based on a calculation result thereof.

The traveling bogie 1 of the embodiment includes a vehicle body 12, a plurality of wheels 14A to 14D, a wheel drive unit 16, an operation unit 17, a battery (not shown), the first mounting table 10, an object detection sensor 11, an obstacle sensor 19, an image sensor 18, and an information processing unit 40. The object detection sensor 11, the obstacle sensor 19, and the image sensor 18 are collectively referred to as mounted sensors. The vehicle body 12 functions as an outer shell that surrounds components accommodated therein.

The operation unit 17 receives input information based on an operation of a user and provides the input information to the information processing unit 40. The operation unit 17 receives input of information on traveling from the user, such as a destination, and provides a result thereof to the information processing unit 40.

As shown in FIG. 4, the plurality of wheels 14A to 14D are attached to an inside of the vehicle body 12 such that a part of the wheels protrudes downward from the vehicle body 12. A configuration of the plurality of wheels 14A to 14D is not limited, but in the embodiment, as shown in FIG. 5, the plurality of wheels 14A to 14D include two first wheels 14A, two second wheels 14B, two third wheels 14C, and two fourth wheels 14D. The two first wheels 14A are drive wheels driven by the wheel drive unit 16 and are disposed apart from each other on the left and right in the vicinity of the front-rear center. The two second wheels 14B are driven wheels and are disposed apart from each other on the left and right in front of the first wheels 14A. The two third wheels 14C are driven wheels and are disposed apart from each other on the left and right in front of the second wheels 14B. The two fourth wheels 14D are driven wheels and are disposed apart from each other on the left and right behind the first wheels 14A.

The wheel drive unit 16 rotationally drives the two first wheels 14A based on control of the information processing unit 40. The wheel drive unit 16 of the present embodiment includes two gear motors (not shown) corresponding to the two first wheels 14A, respectively. The wheel drive unit 16 may include a known drive device such as a motor or an engine instead of the gear motor. The traveling bogie 1 moves forward or backward by rotationally driving the two first wheels 14A at the same speed, and turns right or left around the turning center CL by causing a speed difference between the two first wheels 14A.

The battery supplies power to the wheel drive unit 16, the object detection sensor 11, the obstacle sensor 19, the image sensor 18, and the information processing unit 40. The battery of the embodiment is a lithium-ion battery. The battery may include a secondary battery instead of the lithium-ion battery, based on a known principle.

The first mounting table 10 is a plate-shaped member attached above the vehicle body 12 to cover an upper side of the vehicle body 12. The first mounting table 10 of the embodiment has a substantially rectangular external shape substantially the same as an external shape of the vehicle body 12 in a plan view.

The object detection sensor 11 detects an object outside the vehicle body 12 and provides a detection result thereof to the information processing unit 40. The information processing unit 40 creates a map based on the detection result of the object detection sensor 11. The information processing unit 40 identifies the self-position on the map based on the detection result of the object detection sensor 11 during autonomous traveling. In the embodiment, the object detection sensor 11 is provided on each of the front, rear, left, and right surfaces of the vehicle body 12.

FIG. 4 shows only the object detection sensor 11 disposed on the front surface and the left surface.

The object detection sensor 11 is a sensor capable of detecting an object to be detected within a detection range by receiving reflected light of detection light projected by the object detection sensor 11 toward the outside of the vehicle body. As an example, the object detection sensor 11 projects the detection light in a range that spreads radially around the object detection sensor 11 between the vehicle body 12 and the first mounting table 10. As an example, the object detection sensor 11 of the embodiment is a light detection and ranging (LiDAR).

The obstacle sensor 19 detects an obstacle outside the vehicle body 12 and provides a detection result thereof to the information processing unit 40. The information processing unit 40 controls the traveling of the traveling bogie 1 to avoid the obstacle based on the detection results of the object detection sensor 11 and the obstacle sensor 19 during autonomous traveling. In the embodiment, three obstacle sensors 19 are disposed on the front surface of the vehicle body 12, and one obstacle sensor 19 is disposed on each of the left and right side surfaces. FIG. 4 shows only one obstacle sensor 19 disposed on the front surface. For example, the obstacle sensor 19 is an optical sensor, and an optical axis of the detection light is directed upward by 5 degrees with respect to a horizontal plane.

The image sensor 18 detects a guide mark provided on fixtures or facilities such as a floor, a ceiling, a wall, or a shelf, and provides a detection result thereof to the information processing unit 40. The guide mark of the embodiment includes a line formed on a floor surface and a two-dimensional marker such as a two-dimensional code. The image sensor 18 of the embodiment is a camera including a lens (not shown) and an imaging element (not shown), and is attached to the front surface of the vehicle body 12. The information processing unit 40 stores the detection result of the image sensor 18 as reference data corresponding to the map when the map is created. The information processing unit 40 compares the detection result of the image sensor 18 with the stored reference data during autonomous traveling, and uses a comparison result thereof for self-position identification on the map.

The information processing unit 40 will be described. Each functional block of the information processing unit 40 shown in FIG. 6 can be implemented by elements such as a processor, a CPU, and a memory of a computer, an electronic circuit, and a mechanical device in terms of hardware, and can be implemented by computer programs and the like in terms of software. Here, the functional blocks implemented by the cooperation of these elements are shown. Accordingly, it is understood by those skilled in the art that these functional blocks can be implemented in various forms by a combination of hardware and software.

The information processing unit 40 includes an input unit 41, a route generation unit 42, a map generation unit 44, a self-position identification unit 45, a traveling control unit 46, a storage unit 47, and a communication unit 48. These functional blocks can exchange information with each other via an information transmission path 43 such as a data bus.

The input unit 41 acquires the detection results of the mounted sensors and the input information of the operation unit 17. The route generation unit 42 generates a travel route to a destination. The departure point of the travel route may be a current location or may be a separately set location. The departure point and the destination can be input by the user via the operation unit 17 or can be input from the host controller 60 via the communication unit 48. In the present specification, the host controller 60 includes a computer system and a mobile information terminal such as a smartphone or a tablet terminal.

The map generation unit 44 creates a map based on the detection results of the mounted sensors acquired by the input unit 41 when the map is created. The map generation unit 44 corrects the map based on the detection results of the mounted sensors acquired by the input unit 41 during autonomous traveling.

The self-position identification unit 45 identifies the self-position on the map based on the detection results of the mounted sensors during autonomous traveling. The traveling control unit 46 controls the wheel drive unit 16 to travel on the generated route based on the identified self-position during autonomous traveling. The storage unit 47 stores the information input by the input unit 41, the map generated by the map generation unit 44, the route generated by the route generation unit 42, the identified self-position, and the like. The communication unit 48 transmits and receives information to and from an external device such as the host controller 60 via a wireless or wired communication line.

Next, an assembly method of the bogie unit 100 will be described. The assembly method includes covering the traveling bogie 1 with the towed bogie 2 from above, positioning the second mounting table 20 above the first mounting table 10, disposing the enclosure members 58 to surround the four side surfaces of the traveling bogie 1, and connecting the towed bogie to the traveling bogie by fitting the protrusion 32 into the recess 36.

The traveling operation of the bogie unit 100 assembled in this way will be described. As an example, the bogie unit 100 starts the traveling operation when a command to start the operation is received. This operation is mainly controlled by the information processing unit 40 of the traveling bogie 1.

First, the information processing unit 40 generates the travel route of the traveling bogie 1 to the destination. In this case, the information processing unit 40 receives the information on the departure point and the destination and related information from the host controller 60 via the communication unit 48. The information processing unit 40 generates the travel route based on the information on the destination and the like. The operation of generating the travel route can be implemented by the above-described SLAM technique.

Next, the information processing unit 40 causes the traveling bogie 1 to travel along the travel route, and stops the traveling of the traveling bogie 1 when the traveling bogie 1 arrives at the destination. In this case, the towed bogie 2 towed by the traveling bogie 1 also arrives at the destination.

The features of the bogie unit 100 according to the present embodiment will be described. The bogie unit 100 is a bogie unit including the self-propelled traveling bogie 1 and the towed bogie 2 towed by the traveling bogie 1. The traveling bogie 1 includes the first mounting table 10 on which the load can be placed, the towed bogie 2 includes the second mounting table 20 on which the load can be placed, the second mounting table 20 is disposed to cover the first mounting table 10 from above, and the traveling bogie 1 and the towed bogie 2 are connected to each other by fitting the protrusion 32 provided on one of the upper surface of the first mounting table 10 and the lower surface of the second mounting table 20 and the recess 36 provided on the other.

According to this configuration, since the traveling bogie 1 can be connected to and towed by the towed bogie 2 having a shape that covers the traveling bogie 1, the traveling bogie 1 can be connected to a plurality of types of towed bogies 2 having different sizes, and the towed bogie 2 is less likely to be restricted on the size. Since an application range of the single traveling bogie 1 is expanded, utilization efficiency of the traveling bogie 1 is increased as compared with a case where the traveling bogie 1 having a different size is prepared for each size of the towed bogie 2. In addition, since the number of types of the traveling bogie 1 is reduced, a manufacturing cost of the traveling bogie 1 can be reduced. In addition, the degree of freedom of the travel route is increased as compared with a configuration in which the towed bogie 2 is connected laterally, and the traveling bogie 1 can be used even in a narrow space.

Hereinbefore, examples of the embodiments of the present invention have been described in detail. The embodiment described above is merely a specific example for carrying out the present invention. The contents of the embodiment are not intended to limit the technical scope of the present invention and various design changes such as modification, addition, and deletion of components can be made without departing from the scope of the invention defined in the claims. In the above-described embodiment, the contents regarding such a design change are described with the notation such as "the embodiment" and "in the embodiment", but the design change can be allowed for the contents without such a notation. In addition, hatching attached to the drawing does not limit a material for a hatched object.

### [Modification Examples]

Hereinafter, modification examples will be described. In the drawings and description of the modification examples, the same or equivalent components and members as the embodiment will be represented by the same reference numerals. Description redundant with that in the embodiment will be omitted as appropriate, and description will be made focusing on configurations different from those in the embodiment.

In the above description, an example in which the protrusion 32 and the recess 36 do not advance and retreat has been described, but the present invention is not limited thereto. One or both of the protrusion 32 and the recess 36 may be configured to be advance and retreat. FIG. 7 is a side cross-sectional view showing the connection mechanism 30 of a modification example having an advance/retract mechanism 56. In the modification example, the connection mechanism 30 has the advance/retract mechanism 56 that causes the recess 36 to advance and retreat. The advance/retract mechanism 56 retracts the recess 36 when the connection mechanism 30 is not connected and advances the recess 36 when the connection mechanism 30 is connected, based on the operation of the user. In the example of FIG. 7, the advance/retract mechanism 56 is a hydraulic cylinder that causes the recess 36 to advance and retreat in the up-down direction. As the advance/retract mechanism 56, a known advance/retract mechanism such as a parallel link mechanism or a cam mechanism driven by a motor (not shown) can be adopted instead of the hydraulic cylinder. The connection mechanism 30 may be configured to cause the protrusion 32 to advance and retreat.

In the above description, an example in which the second mounting table 20 has one stage has been described, but the present invention is not limited thereto. The second mounting table may have a plurality of stages.

In the above description, an example in which the recess 36 is a blind hole has been described, but the present invention is not limited thereto. For example, the recess may be a through-hole.

In the above description, an example in which the second mounting table 20 is separated from the first mounting table 10 in the connection state has been described, but the present invention is not limited thereto. In the connection state, the second mounting table may be in contact with the first mounting table 10.

In the above description, an example in which the protrusion 32 and the second connection member 34 are formed separately has been described, but the present invention is not limited thereto. For example, the protrusion may be formed integrally with the second connection member.

In the above description, an example in which the enclosure member 58 is a pipe member extending substantially horizontally has been described, but the present invention is not limited thereto. For example, the enclosure member may have a form other than a pipe shape, such as a plate shape, a string shape, a net shape, a lattice shape, a cloth shape, or a film shape, or may have a form in which these forms are combined. For example, the enclosure member may have a configuration in which the enclosure member extends in a direction other than a horizontal direction, such as a vertical direction or an oblique direction, or may have a configuration in which these directions are combined.

In the above description, the traveling bogie 1 has four side surfaces and is configured in a quadrangular shape in a plan view, but the present invention is not limited thereto, and for example, the traveling bogie 1 may have various shapes such as a circular shape or a triangular shape in a plan view. In this case, the enclosure member 58 may have a configuration corresponding to the shape of the traveling bogie 1. In addition, the enclosure member 58 may not be provided, or the enclosure member 58 may not face a part of the side surface of the traveling bogie 1.

Each of these modification examples exhibits the same actions and effects as those of the embodiment.

Any combination of the above-described embodiments and modification examples is useful as an embodiment according to the present invention. The new embodiment resulting from the combination has the effects of both the combined embodiment and modification examples.

### Industrial Applicability

The present invention can be used in the field of a bogie unit and an assembly method of a bogie unit.

### Reference Signs List

1 traveling bogie
2 towed bogie
10 first mounting table
20 second mounting table
32 protrusion
34 second connection member
36 recess
37 tapped hole
38 first connection member
100 bogie unit

## Claims

1. A bogie unit comprising:
a traveling bogie that is self-propelled; and
a towed bogie that is towed by the traveling bogie,
wherein the traveling bogie includes a first mounting table on which a load is placeable,
the towed bogie includes a second mounting table on which a load is placeable,
the second mounting table is disposed to cover the first mounting table from above, and
the traveling bogie and the towed bogie are connected to each other by fitting a protrusion provided on one of an upper surface of the first mounting table and a lower surface of the second mounting table into a recess provided on the other.

2. The bogie unit according to claim 1, further comprising:
a first connection member that is attachably and detachably attached to the upper surface of the first mounting table and includes the recess.

3. The bogie unit according to claim 2,
wherein the first mounting table has a tapped hole provided in advance for attaching at least two types of attachment members, and
the first connection member is fixed to the tapped hole by a bolt.

4. The bogie unit according to any one of claims 1 to 3,
wherein the protrusion is provided to be non-displaceable on the first mounting table or the second mounting table.

5. The bogie unit according to any one of claims 1 to 3,
wherein the protrusion and one or more additional protrusions and the recess and one or more additional recesses are provided at a plurality of locations interposing a turning center of the traveling bogie.

6. The bogie unit according to any one of claims 1 to 3,
wherein the towed bogie includes enclosure members respectively facing four side surfaces of the traveling bogie.

7. The bogie unit according to any one of claims 1 to 3, further comprising:
an advance/retract mechanism that advances and retracts the protrusion or the recess.

8. An assembly method of a bogie unit including a traveling bogie that includes a first mounting table on which a load is placeable and is self-propelled, and a towed bogie that includes a second mounting table on which a load is placeable and is towed by the traveling bogie, in which the towed bogie includes enclosure members respectively facing four side surfaces of the traveling bogie, and a protrusion is provided on one of an upper surface of the first mounting table and a lower surface of the second mounting table, and a recess is provided on the other, the assembly method comprising:
covering the traveling bogie with the towed bogie from above;
positioning the second mounting table above the first mounting table;
disposing the towed bogie to surround the four side surfaces of the traveling bogie with the enclosure members; and
connecting the towed bogie to the traveling bogie by fitting the protrusion into the recess.
